(19) Europäisches Patentamt
European Patent Office
Office européen des brevets

(11) EP 3 725 837 A1

(12) EUROPEAN PATENT APPLICATION
published in accordance with Art. 153(4) EPC

(43) Date of publication:
21.10.2020 Bulletin 2020/43

(21) Application number: 18888104.9

(22) Date of filing: 10.10.2018

(51) Int Cl.:
*C08L 7/00* (2006.01) *B60C 1/00* (2006.01)
*C08J 9/06* (2006.01) *C08K 3/04* (2006.01)
*C08K 3/36* (2006.01) *C08K 7/02* (2006.01)
*C08L 9/00* (2006.01) *C08L 9/06* (2006.01)

(86) International application number:
PCT/JP2018/037822

(87) International publication number:
WO 2019/116701 (20.06.2019 Gazette 2019/25)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 15.12.2017 JP 2017240809
05.04.2018 JP 2018073323

(71) Applicant: Bridgestone Corporation
Chuo-Ku
Tokyo 104-8340 (JP)

(72) Inventor: KISHIMOTO, Shoko
Tokyo 104-8340 (JP)

(74) Representative: Oxley, Robin John George
Marks & Clerk LLP
15 Fetter Lane
London EC4A 1BW (GB)

# (54) RUBBER COMPOSITION, VULCANIZED RUBBER AND TIRE

(57) There are provided a tire that combines a low elastic modulus at low temperatures with a high hysteresis loss at low temperatures and has excellent on-ice brake performance, and a vulcanized rubber and a rubber composition from which the tire is obtained. A rubber composition comprising a rubber component comprising a natural rubber, a polybutadiene rubber, and a styrene-butadiene copolymer rubber, and 50 to 90 parts by mass of a filler comprising silica relative to 100 parts by mass of the rubber component, wherein the mass n of the natural rubber in the rubber component is 40% by mass or more, the mass n, the mass b of the polybutadiene rubber, and the mass s of the styrene-butadiene copolymer rubber satisfy the relation: $s \leq b \leq n$, provided that when $n = b$, $s < b$, and 50% by mass or more of the silica is comprised in a phase comprising the polybutadiene rubber and the styrene-butadiene copolymer rubber.

EP 3 725 837 A1

## Description

### Technical Field

The present invention relates to a rubber composition, vulcanized rubber, and a tire.

### Background Art

When tires are made to run on an ice snow road, the tires slip by a water film formed between the road surface and the tires, and the brake performance is reduced. Thus, studless tires are required to have improved on-ice performance such as grippability and ease of control of the vehicle even on ice snow roads.

For example, PLT 1 discloses a rubber composition for a tire tread, with a purpose of providing a rubber composition for a tire tread that allows the balance between the wet performance and abrasion resistance and the on-snow performance to exceed the conventional level, wherein the rubber composition for a tire tread is a rubber composition containing 66 to 110 parts by mass of a filler containing 50% by weight or more of silica relative to 100 parts by mass of a diene-based rubber containing 40% by weight or more of a terminal-modified styrene-butadiene rubber, 8 to 35% by weight of a natural rubber, and 15 to 40% by weight of a butadiene rubber, the terminal-modified styrene-butadiene rubber is derived from a compound of which terminal functional group reacts with a silanol group, has a styrene-unit content of 38 to 48% by weight and an oil-extended oil content of less than 30% by weight, the ratio of the amount of the butadiene rubber (BR) to be compounded to the amount of the natural rubber (NR) (BR/NR) is more than 1.0 and 2.5 or less, and the brittle temperature of the rubber composition is -45°C or less.

PLT 2 discloses a heavy-duty studless tire, with a purpose of providing a heavy-duty studless tire improved in braking performance and driving performance on ice snow roads without impairing its workability and productivity, wherein the heavy-duty studless tire has a block pattern, at least in one line of land parts, the value obtained by dividing the sum of the total number of the land parts and the total number of sipeings having an element length in the tread width direction equal to or longer than the average half-width of the land parts by the total circumferential length is 60 pieces/m or more, and the rubber composition of the tread is compounded of 10 to 30 parts by weight of SBR and 2 to 6 parts by weight of thermoplastic resin short fibers of which viscosity becomes lower than the viscosity of the rubber matrix, until reaching the maximum temperature during vulcanization, has an expansion ratio after vulcanization of 5 to 20%, and has a dynamic elastic modulus (E') under 2% strain at 25°C of 14 MPa or more.

PTL 3 discloses a rubber composition for a tire tread, with a purpose of providing a rubber composition for a tire tread improved in wet performance combined with snow performance and a tire including the composition, wherein the rubber composition for a tire tread contains a rubber component containing a blend of at least two or more of (1) 0 to 30 parts by weight of a natural rubber (NR), (2) 0 to 30 parts by weight of a polybutadiene rubber (BR), and (3) 40 to 90 parts by weight of a styrene-butadiene rubber (SBR) having a bound styrene content of 15 to 45% by weight, the styrene content in the rubber component is 15 to 30% by weight, and at least 0.5 to 10 parts by weight of short fibers is contained relative to 100 parts by weight of the rubber component.

PTL 4 disclose a rubber composition, with a purpose of providing a rubber composition that is capable of greatly improving the on-ice performance of tires, wherein the rubber composition contains at least three diene-based polymers that form a plurality of mutually incompatible polymer phases, and silica, the amount of each of the at least three diene-based polymers to be compounded is 10% by mass or more relative to the total amount of the diene-based polymers, the amount to be compounded of a diene-based polymer (A), having the lowest glass transition temperature (Tg) among the diene-based polymers is 85% by mass or more relative to the amount to be compounded of the diene-based polymer, which is to be blended in the highest amount among the diene-based polymers other than the diene-based polymer (A), among the diene-bases polymers of which amount to be compounded is 10% by mass or more relative to the total amount of the diene-based polymers, a diene-based polymer (B), which has a glass transition temperature (Tg) lower than that of a diene-based polymer (C) having the highest glass transition temperature (Tg) and is other than the diene-based polymer (A), is modified by a silicon atom-containing compound, the diene-based polymer (B) is a copolymer of a conjugated diene compound and styrene, satisfying a relation of the formula (i) (St + Vi/2 ≤ 33, wherein St represents the content (% by mass) of bonded styrene in the diene-based polymer (B), and Vi represents the vinyl bond content (% by mass) in the conjugated diene compound portion of the diene-based polymer (B), and the amount of the silica to be compounded is 25 parts by mass or more relative to a total of 100 parts by mass of the diene-based polymers.

### Citation List

### Patent Literature

PTL 1: JP-T 2015-229701
PTL 2: JP-T 2002-127714
PTL 3: JP-T 2002-69239
PLT 4: WO2017/126629

Summary of the invention

Technical Problem

In order to improve the on-ice performance of tires, softening the tires can improve their grip force. As the tires are softened, however, the tires are easily abraded, and their abrasion resistance tends to decrease. With the approaches described in PTLs 1 to 4, however, the hysteresis loss (tanδ) of the tires becomes insufficient at low temperatures (e.g., -20°C), and the balance between the on-ice brake performance and the abrasion resistance requires improvement.

It is an object of the present invention is to provide a tire that combines a low elastic modulus at low temperatures (-20°C) with a high hysteresis loss at low temperatures and has excellent on-ice brake performance, and a vulcanized rubber and a rubber composition for obtaining the above tire.

Solution to Problem

<1> A rubber composition containing
a rubber component containing a natural rubber, a polybutadiene rubber, and a styrene-butadiene copolymer rubber, and
50 to 90 parts by mass of a filler containing silica relative to 100 parts by mass of the rubber component,
wherein the mass n of the natural rubber in the rubber component is 40% by mass or more,
the mass n, the mass b of the polybutadiene rubber, and the mass s of the styrene-butadiene copolymer rubber satisfy the relation: $s \leq b \leq n$, provided that when $n = b$, $s < b$, and
50% by mass or more of the silica is contained in a phase containing the polybutadiene rubber and the styrene-butadiene copolymer rubber.
<2> The rubber composition according to <1>, wherein the ratio of the mass b to the mass s (b/s) is from 1.0 to 2.0, and the ratio of the vinyl bond content vi (%) of the rubber component to the content a of the rubber component [vi/a] is 8 or more.
<3> The rubber composition according to <1> or <2>, wherein the ratio of the bound styrene content st (%) of the rubber component to the mass s (st/s) is 1.0 or less.
<4> The rubber composition according to any one of <1> to <3>, wherein the polybutadiene rubber and the styrene-butadiene copolymer rubber are each silane-modified.
<5> The rubber composition according to any one of <1> to <4>, wherein the composition further contains a resin, and the ratio of the mass rs of the resin to the mass si of the silica (rs/si) is from 0.1 to 1.2.
<6> The rubber composition according to any one of <1> to <5>, wherein the filler further contains carbon black, and the ratio of the mass si of the silica to the mass cb of the carbon black (si/cb) is from 0.1 to 1.2.
<7> The rubber composition according to any one of <1> to <6>, further containing a foaming agent.
<8> The rubber composition according to any one of <1> to <7>, further containing a hydrophilic short fiber.
<9> The rubber composition according to any one of <1> to <8>, the mass n of the natural rubber is 40 to 80% by mass, the mass b of the polybutadiene rubber is 5 to 40% by mass, and the mass s of the styrene-butadiene copolymer rubber is 3 to 30% by mass in the rubber component.
<10> A vulcanized rubber obtained by vulcanizing the rubber composition according to any one of <1> to <9>.
<11> The vulcanized rubber according to <10> having foam pores.
<12> A tire comprising the vulcanized rubber according to <10>.
<13> The tire according to <12> having foam pores.

Advantageous Effects of Invention

According to the present invention, there can be provided a tire that combines a low elastic modulus at low temperatures (-20°C) with a high hysteresis loss at low temperatures and has excellent on-ice brake performance, and a vulcanized rubber and a rubber composition for obtaining the above tire.

Brief Description of the Drawings

Fig. 1 is a schematic cross-sectional (partial enlarged) view in the radial direction of a particle of silica; and

Fig. 2 is a graph schematically showing mercury intrusion/extrusion curves of silica in a measurement based on mercury porosimetry using a mercury porosimeter. The vertical axis represents differential mercury intrusion volume (-dV/d(log d)) in mercury intrusion curve C and differential mercury extrusion volume (-dV/d(log d)) in mercury extrusion curve D; V represents mercury intrusion volume (cc) in mercury intrusion curve C, and mercury extrusion volume (cc) in mercury extrusion curve D; d represents the diameter (nm) of an opening of a pore of silica, which is on the horizontal axis.

Description of Embodiments

The present invention is illustrated and described in detail based on embodiments thereof hereinunder.

In the following description, the wording "A to B" indicating the numerical range represents a numerical range including the end points A and B, that is "A or more and B or less" (when $A < B$) or "A or less and B or more" (when $B < A$).

Parts by mass and % by mass are synonymous with parts by weight and % by weight, respectively.

<Rubber composition>

A rubber composition of the present invention contains a rubber component containing a natural rubber, a polybutadiene rubber, and a styrene-butadiene copolymer rubber and 50 to 90 parts by mass of a filler containing silica relative to 100 parts by mass of the rubber component. The mass n of the natural rubber in the rubber component is 40% by mass or more, the mass n, the mass b of the polybutadiene rubber, and the mass s of the styrene-butadiene copolymer rubber satisfy the relation: $s \leq b \leq n$, provided that when $n = b$, $s < b$, and 50% by mass or more of the silica is contained in a phase containing the polybutadiene rubber and the styrene-butadiene copolymer rubber.

Since the rubber composition is constituted as described above, a tire to be obtained from the rubber composition of the present invention combines a low elastic modulus at low temperatures with a high hysteresis loss at low temperatures and has excellent on-ice brake performance.

The reason for this is not clearly understood, but it is speculated to be due to the following reason.

The styrene-butadiene copolymer rubber (SBR) and the polybutadiene rubber (BR) are likely to be compatible with each other due to their structures derived from butadiene, and the SBR and BR tend to separate from the natural rubber (NR). Accordingly, it is conceivable that the rubber component of the present invention is likely to undergo phase separation into a phase containing the NR (the phase is referred to as the NR phase) and a phase containing the SBR and BR (the phase is referred to as the SB phase).

The SB phase contains the BR, which is less elastic than SBR, and the SBR, which is more elastic than the BR, and the amount of the SBR is not larger than that of the BR ($s \leq b$). It is conceivable that this structure reduces the elastic modulus of a tire at low temperatures (-20°C) and makes the tire more deformable to thereby enable the hysteresis loss at low temperatures to increase and also facilitate the effectiveness of the brake.

Since the content of the NR in the rubber component is 40% or more and is not less than that of the BR ($b \leq n$), it is conceivable that the elastic modulus of the tire at low temperatures is reduced and the tire becomes more deformable to thereby enable the hysteresis loss at low temperatures to increase and facilitate the effectiveness of the brake.

Furthermore, 50 to 90 parts by mass of the filler containing silica is contained relative to 100 parts by mass of the rubber component and 50% or more of the silica of the total silica is contained in the SB phase. This reduces the elastic modulus of the tire at low temperatures and makes the tire more deformable to thereby enable the hysteresis loss at low temperatures to increase and facilitate the effectiveness of the brake.

The present invention is described in detail hereinunder.

[Rubber component]

The rubber composition of the present invention contains a rubber component containing a natural rubber (NR), a polybutadiene rubber (BR), and a styrene-butadiene copolymer rubber (SBR).

As described above, the SBR and BR are likely to be compatible with each other due to their structures derived from butadiene, and the SBR and BR are likely to separate from the NR. Thus, the rubber component is likely to undergo phase separation into a phase containing the NR (NR phase) and a phase containing the SBR and BR (SB phase). The SBR has a rigid structure derived from styrene, and thus, the SB phase containing the SBR is harder than the NR phase.

Furthermore, the SB phase contains 50 % by mass of the total silica, and the rubber component has a soft-hard phase structure containing the NR phase and the SB phase. The rubber component contained in the rubber composition of the present invention has such a phase structure, and thus, it is conceivable that a tire obtained from the rubber composition of the present invention will have a lower elastic modulus and a higher hysteresis loss at low temperatures.

Although the rubber component may be unmodified or modified, from the viewpoint of allowing the SB phase to contain a larger amount of the silica, either one or both of the polybutadiene rubber and the styrene-butadiene copolymer rubber, which are the rubber component constituting the SB phase, is/are preferably modified by a modifying functional group having an affinity for silica.

[Modifying functional group]

A modifying functional group is not specifically defined provided that the functional group has an affinity for the filler containing silica, and preferably contains at least one atom selected from the group consisting of a nitrogen atom, a silica atom, an oxygen atom, and a tin atom.

Examples thereof include modifying functional groups containing a nitrogen atom, modifying functional groups containing a silicon atom, modifying functional groups containing an oxygen atom, and modifying functional groups containing a tin atom. One alone or two or more of these may be used here either singly or as combined.

Of these, modifying functional groups containing a nitrogen atom, modifying functional group containing a silicon atom, and modifying functional group containing an oxygen atom are preferred in respect of strongly interacting with fillers such as silica and carbon black.

A method for introducing a modifying functional group into the rubber component is not specifically defined and may be appropriately selected depending on the purpose. Examples thereof include a method including use of a functional group-containing polymerization initiator, a method including copolymerizing a functional group-containing monomer with another compound, and a method including allowing a modifying agent to react on polymer terminals of the rubber component. One alone or two or more of these methods may be carried out here either singly or as combined.

- Modifying functional group containing a nitrogen atom -

The modifying functional group containing a nitrogen atom is not specifically defined and may be appropriately selected depending on the purpose. Examples thereof include substituted amino groups represented by the following general formula (I) and cyclic amino groups represented by the following general formula (II):

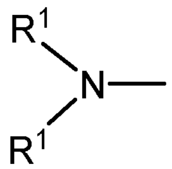

(I)

wherein $R^1$ is an alkyl group, a cycloalkyl group, or an aralkyl group having from 1 to 12 carbon atoms. Here, the alkyl group is preferably a methyl group, an ethyl group, a butyl group, an octyl group, or an isobutyl group, the cycloalkyl group is preferably a cyclohexyl group, and the aralkyl group is preferably a 3-phenyl-1-propyl group. Each $R^1$ may be the same or different.

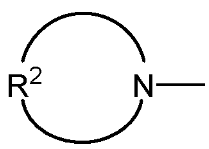

(II)

wherein the $R^2$ group is an alkylene group, a substituted alkylene group, an oxy-alkylene group, or a N-alkylamino-alkylene group having from 3 to 16 methylene groups. Here, the substituted alkylene group includes monosubstituted to octasubstituted alkylene groups, and examples of substituents include a linear or branched chain alkyl group, a cycloalkyl group, a bicycloalkyl group, an aryl group, or an aralkyl group having from 1 to 12 carbon atoms. Here, the alkylene group is preferably a trimethylene group, a tetramethylene group, a hexamethylene group, and a dodecamethylene group, the substituted alkylene group is preferably a hexadecamethylene group, the oxyalkylene group is preferably an oxydiethylene group, and the N-alkylamino-alkylene group is preferably a N-alkylazadiethylene group.

Examples of the cyclic amino group represented by the general formula (II) are not specifically defined and

may be appropriately selected depending on the purpose. Examples thereof include groups in which a hydrogen atom bonded to the nitrogen atom is removed from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane or the like. One alone or two or more of these may be used here either singly or as combined.

- Modifying functional group containing a silicon atom -

The modifying functional group containing a silicon atom is not specifically defined and may be appropriately selected depending on the purpose. Examples thereof include modifying functional groups having a silicon-carbon bond that are formed by using a coupling agent represented by the following general formula (III).

Such modifying functional groups are preferred in that allowing the rubber component constituting the SB phase to chemically bond with silicon via a silicon-carbon bond can increase the affinity between the SB phase and the filler to thereby allow the SB phase to contain a larger amount of the filler.

Silicon generally has low ability of reinforcing the rubber composition and the like due to its low affinity for a rubber component when merely mixed into a rubber composition. However, when the rubber component constituting the SB phase is allowed to chemically bond with silicon via a silicon-carbon bond, the affinity between the rubber component constituting the SB phase and the filler can be enhanced to thereby further increase the hysteresis loss of the tire.

$$(R^3)_aZ(R^4)_b \qquad (III)$$

wherein Z is silicon, $R^3$'s are each independently selected from the group consisting of an alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms, $R^4$'s are each independently chlorine or bromine, a is from 0 to 3, b is from 1 to 4, and a + b = 4. Here, the alkyl group is preferably a methyl group, an ethyl group, a n-butyl group, a n-octyl group, and a 2-ethylhexyl, the cycloalkyl group is preferably a cyclohexyl group, the aryl group is preferably a phenyl group, and the aralkyl group is preferably a neophyl group. Each $R^3$ may be the same or different. Each $R^4$ may be the same or different.

In the case where an increase in the interaction between the modified rubber and silica is intended, there may be mentioned modifying agents having at least one of compounds represented by the following general formula (III-1) and compounds represented by the following general formula (III-2).

$$R^1{}_a\text{-Si}\{OR^2)_{4-a} \qquad (III\text{-}1)$$

In the general formula (III-1), $R^1$ and $R^2$ each independently represent a monovalent aliphatic hydrocarbon group having from 1 to 20 carbon atoms or a monovalent aromatic hydrocarbon group having from 6 to 18 carbon atoms, a is an integer of from 0 to 2, when plural $OR^2$'s are present, the plural $OR^2$'s may be the same or different, and an active proton is not included in the molecule.

Here, specific examples of the compounds represented by the general formula (III-1) (alkoxysilane compounds) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, and divinyldiethoxysilane. Of these, tetraethoxysilane, methyltriethoxysilane and dimethyldiethoxysilane are preferred. One alone or two or more of such compounds may be used here either singly or as combined.

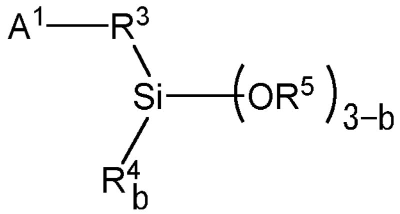 (III-2)

In general formula (III-2), $A^1$ is a monovalent group having at least one functional group selected from the group consisting of epoxy, glycidyloxy, isocyanate, imine, carboxylate, carboxylic acid anhydride, cyclic tertiary amine, acyclic tertiary amine, pyridine, silazane, and disulfide, $R^3$ is a single bond or a divalent hydrocarbon group, $R^4$ and $R^5$ are each independently a monovalent aliphatic hydrocarbon group having from 1 to 20 carbon atoms or a monovalent aromatic hydrocarbon group having from 6 to 18 carbon atoms, b is an integer of from 0 to 2, when plural $OR^5$'s are present, the plural $OR^5$'s may be the same or different, and an active proton is not included in the molecule.

Specific examples of the compounds represented by the general formula (III-2) include epoxy group-containing alkoxysilane compounds, such as 2-glycidyloxyethyltrimethoxysilane, 2 -glycidyloxyethyltriethoxysilane, (2-glycidyloxyethyl)methyldimethoxysilane, 3-glycidyloxypropyltrimethoxysilane, 3-glycidyloxypropyltriethoxysilane, (3-glycidyloxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. Of these, 3-glycidyloxypropyltrimethoxysilane and 2-(3,4-epoxycyclohexyl)ethyltrimethoxysilane are preferably used.

Examples of a coupling agent containing silicon are not specifically defined and may be appropriately selected depending on the purpose. Examples thereof include hydrocarbyloxysilane compounds, $SiCl_4$ (silicon tetrachloride), $(R^a)SiCl_3$, $(R^a)_2SiCl_2$, and $(R^a)_3SiCl$. $R^a$'s each independently represent an alkyl group having from 1 to 20 carbon atoms, a cycloalkyl group having 3 to 20 carbon atoms, an aryl group having 6 to 20 carbon atoms, or an aralkyl group having 7 to 20 carbon atoms.

Of these, hydrocarbyloxysilane compounds are preferred from the viewpoint of having a high affinity for silica.

(Hydrocarbyloxysilane Compound)

Hydrocarbyloxysilane compounds are not specifically defined and may be appropriately selected depending on the purpose. Examples thereof include hydrocarbyloxysilane compounds represented by the following general formula (IV):

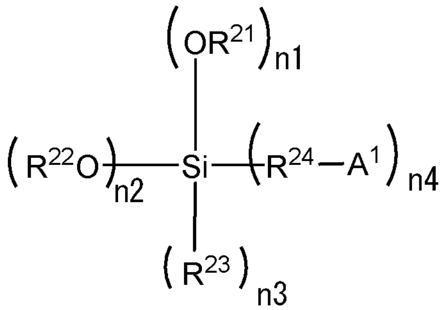 (IV)

wherein n1 + n2 + n3 + n4 = 4, provided that n2 is an integer from 1 to 4 and n1, n3, and n4 each are an integer of from 0 to 3, and $A^1$ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group: the same shall apply hereinafter), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolysable group-having, primary or secondary amino group or mercapto group. When n4 is 2 or more, then $A^1$'s may be the same or different, $A^1$ may bond to Si to be a divalent group that forms a cyclic structure. $R^{21}$ represents a monovalent aliphatic or alicyclic hydrocarbon group, having from 1 to 20 carbon atoms, or a monovalent aromatic hydrocarbon group having from 6 to 18 carbon atoms. When n1 is 2 or more, then $R^{21}$'s may be the same or different. $R^{23}$ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine). When n3 is 2 or more, then $R^{23}$'s may be the same or different. $R^{22}$ represents a monovalent aliphatic or alicyclic hydrocarbon group, having from 1 to 20 carbon atoms or a monovalent

aromatic hydrocarbon group having from 6 to 18 carbon atoms, optionally having a nitrogen atom and/or a silicon atom. When n2 is 2 or more, then $R^{22}$'s may be the same or different, or may bond to each other to form a ring. $R^{24}$ represents a divalent aliphatic or alicyclic hydrocarbon group, having from 1 to 20 carbon atoms, or a divalent aromatic hydrocarbon group having from 6 to 18 carbon atoms. When n4 is 2 or more, then $R^{24}$'s may be the same or different. The hydrolysable group in the hydrolysable group-having, primary or secondary amino group or the hydrolysable group-having mercapto group is preferably a trimethylsilyl group or a tert-butyldimethylsilyl group, more preferably a trimethylsilyl group. In the present specification, "monovalent aliphatic or alicyclic hydrocarbon group, having from 1 to 20 carbon atoms" means "monovalent aliphatic hydrocarbon group having from 1 to 20 carbon atoms, or monovalent alicyclic hydrocarbon group having from 3 to 20 carbon atoms". The same shall apply to the divalent hydrocarbon group.

More preferably, the hydrocarbyloxysilane compound represented by the general formula (IV) is a hydrocarbyloxysilane compound represented by the following general formula (V):

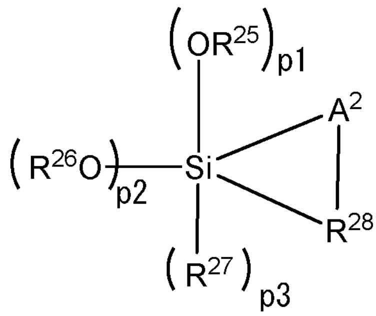

(V)

In the formula, p1 + p2 + p3 = 2 (wherein p2 is an integer of from 1 to 2, and p1 and p3 each are an integer of from 0 to 1); $A^2$ represents NRa (where Ra represents a monovalent hydrocarbon group, a hydrolysable group or a nitrogen-containing organic group; and the hydrolysable group is preferably a trimethylsilyl group or a tert-butyldimethylsilyl group, more preferably a trimethylsilyl group), or a sulfur; $R^{25}$ represents a monovalent aliphatic or alicyclic hydrocarbon group, having from 1 to 20 carbon atoms, or a monovalent aromatic hydrocarbon group having from 6 to 18 carbon atoms; $R^{27}$ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine); $R^{26}$ represents a monovalent aliphatic or alicyclic hydrocarbon group, having from 1 to 20 carbon atoms, a monovalent aromatic hydrocarbon group having from 6 to 18 carbon atoms or a nitrogen-containing organic group, optionally having a nitrogen atom and/or a silicon atom. When p2 is 2, then $R^{26}$'s may be the same or different, or may bond to each other to form a ring. $R^{28}$ represents a divalent aliphatic or alicyclic hydrocarbon group, having from 1 to 20 carbon atoms, or a divalent aromatic hydrocarbon group having from 6 to 18 carbon atoms.

Further, the hydrocarbyloxysilane compound represented by the general formula (IV) is more preferably a hydrocarbyloxysilane compound represented by the following general formula (VI) or (VII):

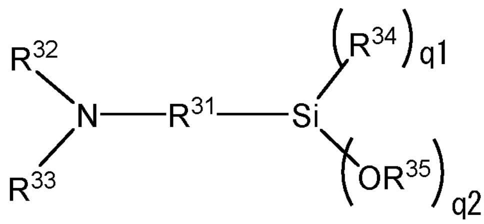

(VI)

In the formula, q1 + q2 = 3 (where q1 is an integer of from 0 to 2, and q2 is an integer of from 1 to 3); $R^{31}$ represents a divalent aliphatic or alicyclic hydrocarbon group, having from 1 to 20 carbon atoms, or a divalent aromatic hydrocarbon group having from 6 to 18 carbon atoms; $R^{32}$ and $R^{33}$ each independently represent a hydrolysable group, a monovalent aliphatic or alicyclic hydrocarbon group, having from 1 to 20 carbon atoms, or a monovalent aromatic hydrocarbon group having from 6 to 18 carbon atoms; $R^{34}$ represents a monovalent aliphatic or alicyclic hydrocarbon group, having from 1 to 20 carbon atoms, or a monovalent aromatic hydrocarbon group having from 6 to 18 carbon atoms. When q1 is 2, then $R^{34}$'s may be the same or different. $R^{35}$ represents a monovalent aliphatic or alicyclic hydrocarbon group, having from 1 to 20 carbon atoms, or a monovalent aromatic hydrocarbon group having from 6 to 18 carbon atoms. When q2 is 2 or more, then $R^{35}$'s may be the same or different.

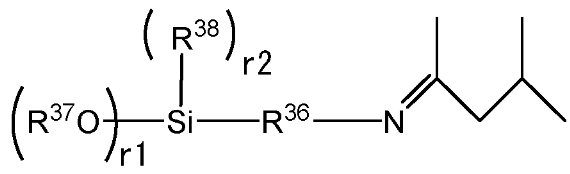 (VII)

In the formula, r1 + r2 = 3 (where r1 is an integer of from 1 to 3, r2 is an integer of from 0 to 2); $R^{36}$ represents a divalent aliphatic or alicyclic hydrocarbon group, having from 1 to 20 carbon atoms, or a divalent aromatic hydrocarbon group having from 6 to 18 carbon atoms; $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group, having from 1 to 20 carbon atoms, or a monovalent aromatic hydrocarbon group having from 6 to 18 carbon atoms. When r1 is 2 or more, then $R^{37}$'s may be the same or different. $R^{38}$ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms. When r2 is 2, then $R^{38}$'s may be the same or different.

The hydrocarbyloxysilane compound represented by the general formula (IV) is preferably a compound having two or more nitrogen atoms represented by the following general formula (VIII) or (IX).

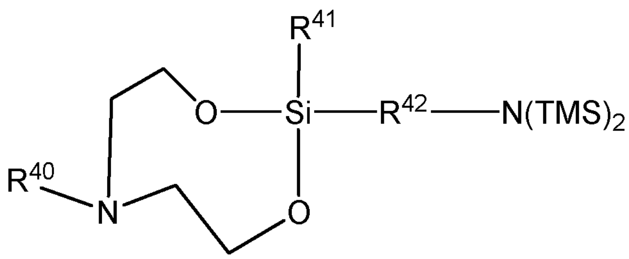 (VIII)

In the formula, TMS represents a trimethylsilyl group; $R^{40}$ represents a trimethylsilyl group, a monovalent aliphatic or alicyclic hydrocarbon group, having from 1 to 20 carbon atoms, or a monovalent aromatic hydrocarbon group having from 6 to 18 carbon atoms; $R^{41}$ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms; $R^{42}$ represents a divalent aliphatic or alicyclic hydrocarbon group, having from 1 to 20 carbon atoms, or a divalent aromatic hydrocarbon group having from 6 to 18 carbon atoms.

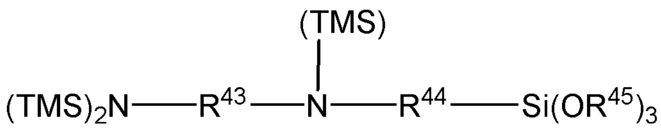 (IX)

In the formula, TMS represents a trimethylsilyl group; $R^{43}$ and $R^{44}$ each independently represent a divalent aliphatic or alicyclic hydrocarbon group, having from 1 to 20 carbon atoms, or a divalent aromatic hydrocarbon group having from 6 to 18 carbon atoms; $R^{45}$ represents a monovalent aliphatic or alicyclic hydrocarbon group, having from 1 to 20 carbon atoms, or a monovalent aromatic hydrocarbon group having from 6 to 18 carbon atoms, and plural $R^{45}$'s may be the same or different.

Also preferably, the hydrocarbyloxysilane compound represented by the general formula (IV) is a hydrocarbyloxysilane compound represented by the following general formula (X):

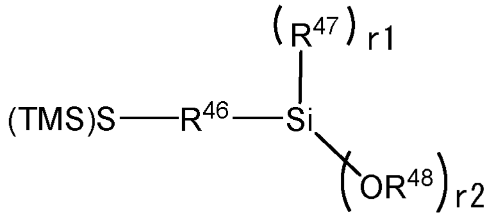 (X)

In the formula, r1 + r2 = 3 (wherein r1 is an integer of from 0 to 2, and r2 is an integer of from 1 to 3); TMS represents a trimethylsilyl group; $R^{46}$ represents a divalent aliphatic or alicyclic hydrocarbon group, having from 1 to 20 carbon atoms, or a divalent aromatic hydrocarbon group having from 6 to 18 carbon atoms; $R^{47}$ and $R^{48}$ each independently represent a monovalent aliphatic or alicyclic hydrocarbon group, having from 1 to 20 carbon atoms, or a monovalent aromatic hydrocarbon group having from 6 to 18 carbon atoms, and plural $R^{47}$'s and $R^{48}$'s may be the same or different.

Further, the hydrocarbyloxysilane compound represented by the general formula (IV) is preferably a compound represented by the following general formula (XI):

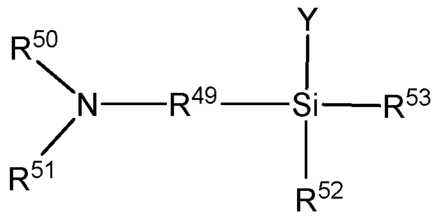

(XI)

In the formula, Y represents a halogen atom; $R^{49}$ represents a divalent aliphatic or alicyclic hydrocarbon group, having from 1 to 20 carbon atoms, or a divalent aromatic hydrocarbon group having from 6 to 18 carbon atoms; $R^{50}$ and $R^{51}$ each independently represent a hydrolysable group, or a monovalent aliphatic or alicyclic hydrocarbon group, having from 1 to 20 carbon atoms, or a monovalent aromatic hydrocarbon group having from 6 to 18 carbon atoms, or $R^{50}$ and $R^{51}$ bond to each other to form a divalent organic group; $R^{52}$ and $R^{53}$ each independently represent a halogen atom, a hydrocarbyloxy group, or a monovalent aliphatic or alicyclic hydrocarbon group, having from 1 to 20 carbon atoms, or a monovalent aromatic hydrocarbon group having from 6 to 18 carbon atoms. Preferably, $R^{50}$ and $R^{51}$ each are a hydrolysable group; and as the hydrolysable group, more preferred is a trimethylsilyl group or a tert-butyldimethylsilyl group, and even more preferred is a trimethylsilyl group.

The hydrocarbyloxysilane compound represented by the above-mentioned general formulae (IV) to (XI) is preferably used in producing the modified rubber component through anionic polymerization.

Also preferably, the hydrocarbyloxysilane compound represented by the above-mentioned general formulae (IV) to (XI) is an alkoxysilane compound.

A modifying agent preferred when a diene-based polymer is modified by anionic polymerization is not specifically defined and may be appropriately selected depending on the purpose. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. One alone or two or more of these may be used here either singly or as combined.

The hydrocarbyloxysilane compound is preferably the amide moiety of a lithium amide compound to be used as a polymerization initiator in anionic polymerization.

The lithium amide compound is not specifically defined and may be appropriately selected depending on the purpose. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperadide, lithium ethylpropylamide, lithium ethylbutylamide, lithium ethylbenzylamide, and lithium methylphenethylamide. For example, the modifier constituting the amide moiety of lithium hexamethyleneimide is hexamethyleneimine, the modifier constituting the amide moiety of lithium pyrrolizide is pyrrolidine, and the modifier constituting the amide moiety of lithium piperidide is piperidine. One alone or two or more of these may be used here either singly or as combined.

- Modifying functional group containing an oxygen atom -

The modifying functional group containing an oxygen atom is not specifically defined and may be appropriately selected depending on the purpose. Examples thereof include alkoxy groups such as a methoxy group, an ethoxy group, a n-propoxy group, an isopropoxy group, a n-butoxy group, a sec-butoxy group, and a t-butoxy group; alkoxyalkyl groups such as a methoxymethyl group, a methoxyethyl group, an ethoxymethyl group, and an ethoxyethyl group; alkoxyaryl groups such as a methoxyphenyl group and an ethoxyphenyl group; alkylene oxide groups such as an epoxy group and a tetrahydrofuranyl group; trialkylsilyloxy groups such as a trimethylsilyloxy group, a triethylsilyloxy group, and a t-butyldimethylsilyloxy group. One alone or two or more of these may be used here either singly or as combined.

From the viewpoint of allowing the SB phase to contain a larger amount of the filler, the polybutadiene rubber and the styrene-butadiene copolymer rubber each are preferably silane-modified. Specifically, the polybutadiene rubber and the styrene-butadiene copolymer rubber each are preferably a rubber component modified by the hydrocarbyloxysilane compounds represented by the general formulas (IV) to (XI) described above.

The rubber component may contain a rubber other than the natural rubber, polybutadiene rubber, and styrene-butadiene copolymer rubber (the rubber is referred to as other rubber).

Examples of the other synthetic rubber include a synthetic isoprene rubber, an ethylene-propylene-diene tercopolymer rubber, a chloroprene rubber, a butyl rubber, a halogenated butyl rubber, and an acrylonitrile-butadiene rubber. One alone or two or more of these synthetic diene-based rubbers may be used either singly or as combined.

The mass n of the natural rubber in the rubber component is 40% by mass or more, and the mass n, the mass b of the polybutadiene rubber, and the mass s of the styrene-butadiene copolymer rubber satisfy the relation: $s \leq b \leq n$, provided that when $n = b$, $s < b$.

Note that the unit of the mass n, mass b, and mass s is "% by mass".

The mass n of the natural rubber and the mass b of the polybutadiene rubber may be the same, but the mass b of the polybutadiene rubber and the mass s of the styrene-butadiene copolymer rubber will not take the same value simultaneously.

When the mass n of the natural rubber in the rubber component is less than 40% by mass, a tire to be obtained will be hard at low temperatures and becomes unlikely to deform. For this reason, the tire cannot combine a low elastic modulus at low temperatures with a high hysteresis loss at low temperatures, and thus, cannot sufficiently exert its on-ice brake performance.

Preferably, the mass n of the natural rubber is 40 to 80% by mass, the mass b of the polybutadiene rubber is 5 to 40% by mass, and the mass s of the styrene-butadiene copolymer rubber is 3 to 30% by mass. Total of n, b and s shall not exceed 100% by mass.

More preferably, the mass n of the natural rubber is 40 to 70% by mass, the mass b of the polybutadiene rubber is 10 to 40% by mass, and the mass s of the styrene-butadiene copolymer rubber is 5 to 25% by mass. Still more preferably, the mass n of the natural rubber is 40 to 65% by mass, the mass b of the polybutadiene rubber is 20 to 40% by mass, and the mass s of the styrene-butadiene copolymer rubber is 10 to 25% by mass.

The ratio of the mass b of the polybutadiene rubber to the mass s of the styrene-butadiene copolymer rubber (b/s) is preferably from 1.0 to 2.0. When the amount s of the styrene-butadiene copolymer rubber is equal to or less than the amount b of the polybutadiene rubber, the elastic modulus of the SB phase is prevented from excessively increasing, and the elastic modulus of the tire under a low temperature environment is likely to be reduced.

The amount s of the styrene-butadiene copolymer rubber in the rubber component is preferably from 10 to 30% by mass, more preferably from 10 to 25% by mass, still more preferably from 10 to 22% by mass.

The ratio of the vinyl bond content vi (%) of the rubber component of the rubber component to the content a of the rubber component (parts by mass) [vi/a] is preferably 8 or more.

The unit of the content a of the rubber component is "parts by mass". [vi/a] is calculated by the following expression:

$$[(a_b \times vi_b) + (a_{sb} \times vi_{sb})] / a$$

wherein

$a_b$ is the content of the polybutadiene rubber (parts by mass),
$vi_b$ is the vinyl bond content (%) of the polybutadiene rubber,
$a_{sb}$ is the content of the styrene-butadiene copolymer rubber (parts by mass), and
$vi_{sb}$ is the vinyl bond content (%) of the styrene-butadiene copolymer rubber.

The unit of the content $a_b$ and content $a_{sb}$ is "parts by mass".

When vi/a is 8 or more, the elastic modulus of the tire at low temperatures is further reduced and the tire becomes more deformable to thereby enable the hysteresis loss at low temperatures to increase and facilitate the effectiveness of the brake.

Furthermore, from the viewpoint of more easily achieving the effect of the present invention, it is preferred that the ratio of the mass b of the polybutadiene rubber to the mass s of the styrene-butadiene copolymer rubber (b/s) be 1.0 to 2.0 and the ratio of the vinyl bond content vi (%) of the rubber component to the content a of the rubber component [vi/a] be 8 or more.

The vinyl bond content vi (%) of the rubber component can be determined by an infrared method (Morello method).

The ratio of the bound styrene content st (%) of the rubber component to the mass s of the styrene-butadiene copolymer rubber (st/s) is preferably 1.0 or less, more preferably 0.7 or less, even more preferably 0.6 or less.

When st/s is 1.0 or less, the rigidity of the styrene-butadiene copolymer rubber is lowered to thereby enable further decrease in the elastic modulus of the tire under a low temperature environment and easily improve the on-ice brake performance.

The bound styrene content st (%) of the rubber component can be determined by an infrared method (Morello method).

<Filler>

The rubber composition of the present invention contains from 50 to 90 parts by mass of a filler including silica relative to 100 parts by mass of the rubber component.

The content of the filler in the rubber composition is preferably 55 parts by mass or more, and more preferably 65 parts by mass or more, and is preferably 85 parts by mass or less, and more preferably 75 parts by mass or less relative to 100 parts by mass of the rubber component.

Furthermore, 50% by mass or more of the total content of silica is contained in a phase (SB phase) containing polybutadiene rubber and styrene-butadiene copolymer rubber.

When the amount of silica contained in the SB phase is less than 50% by mass of the total of silica, more than half of the silica is distributed in the NR phase, and the NR phase cannot be made soft, resulting in a failure to reduce the elastic modulus of a tire at low temperature.

The amount of silica contained in the SB phase is preferably more than 50% by mass, more preferably 60% by mass or more, and further preferably 70% by mass or more.

The amount of the filler including silica contained in the SB phase (or the ratio of distribution of the filler) may be measured by the following method.

The ratio of distribution of the filler in the rubber composition is similar to the ratio of distribution of the filler in vulcanized rubber, and may be measured using vulcanized rubber prepared by vulcanizing the rubber composition as a sample for measurement.

For example, after cutting a sample in the direction at a 38° angle to the top surface of the sample, the smooth surface of the sample formed by cutting is photographed in the direction perpendicular to the smooth surface with a scanning electron microscope (SEM), e.g., trade name "Ultra 55" made by Carl Zeiss, using focused ion beam at an accelerating voltage of 1.8 - 2.2 V. The SEM image obtained is subjected to image processing and analyzed to determine the ratio of distribution of the filler. Methods of analysis include several options, and in the present invention, for example, the following method may be used.

In the measurement of a system in which the rubber component is separated into two phases of an NR phase and a SB phase as in the present invention, a possible means therefor is to converting the SEM image obtained into a trinary image of two rubber components and filler portions with a histogram and subject the obtained trinary image to image analysis. In that case, the perimeter of the filler contained in each of the two rubber components is determined, and the ratio of the filler existing in one phase of the rubber components is calculated based on the total amount of the filler in the area measured. When the filler is at the boundary of two rubber components, two points at which the three of the respective rubber components and the filler come into contact are connected to divide the perimeter of the filler. Particles of 20 pixels or less are regarded as noise and not counted. The method of measuring the abundance of the filler or the method of image analysis are not limited to the above description.

The filler is not particularly limited as long as it includes silica. For example, a reinforcing filler which reinforces a rubber composition is used. Examples of reinforcing filler in addition to silica include white filler such as aluminum hydroxide and calcium carbonate, and carbon black. Silica may be used alone, or both silica and carbon black may be used as a filler.

(Carbon black)

Carbon black, which is not particularly limited, may be appropriately selected according to the purpose. Carbon black of, e.g., FEF, SRF, HAF, ISAF, SAF grades, is preferred, and of HAF, ISAF, SAF grades, is more preferred.

(Silica)

The type of silica is not particularly limited. Standard grade silica and special silica prepared by surface treatment with, e.g., silane coupling agent may be used according to the application.

Silica has a CTAB (cetyltrimethylammonium bromide) specific surface area of preferably 150 $m^2/g$ or more, more preferably 180 $m^2/g$ or more, further preferably 190 $m^2/g$ or more, and still more preferably 195 $m^2/g$ or more, and particularly preferably 197 $m^2/g$ or more. Silica has a CTAB specific surface area of preferably 600 $m^2/g$ or less, more preferably 300 $m^2/g$ or less, and particularly preferably 250 $m^2/g$ or less. A CTAB specific surface area of silica of 180

$m^2/g$ or more further improves wear resistance, and a CTAB specific surface area of silica of 600 $m^2/g$ or less reduces rolling resistance.

Examples of silica, which are not particularly limited, include wet silica (hydrated silica), dry silica (anhydrous silica), calcium silicate, and aluminum silicate. Of them, wet silica is preferred. Such silica may be used alone, or two or more of them may be used in combination.

For the rubber composition of the present invention, silica may be used, in which the CTAB specific surface area ($m^2/g$) (simply referred to as "CTAB" in formula (Y)) and the ink bottle-shaped pore index (IB) satisfy the relationship of the following formula (Y): IB $\leq$ -0.36 $\times$ CTAB + 86.8 (Y).

As used herein, the CTAB specific surface area ($m^2/g$) refers to a value measured in accordance with ASTM D3765-92. In this regard, since ASTM D3765-92 is directed to a method of measuring CTAB of carbon black, in the present invention, a cetyltrimethylammonium bromide (hereinafter abbreviated as CE-TRAB) standard solution is separately prepared instead of the standard product, IRB#3 (83.0 $m^2/g$), and a silica OT (sodium di-2-ethylhexyl sulfosuccinate) solution is standardized using the above solution; and assuming the cross-sectional area of a CE-TRAB molecule adsorbed to the surface of silica to be 0.35 $nm^2$, the specific surface area ($m^2/g$) calculated from the amount of adsorption of CE-TRAB is defined as the CTAB value. This is because since carbon black and silica has a different surface, the amount of adsorption of CE-TRAB will be different even in the same surface area.

Furthermore, the ink bottle-shaped pore index (IB) means a value determined in a measurement of silica having pores with an opening 1.2 $\times$ $10^5$ nm - 6 nm in diameter on the outer surface based on mercury porosimetry using a mercury porosimeter, from diameter (M1) (nm) of an opening with the maximum intrusion volume of mercury when pressure is increased from 1 PSI to 32,000 PSI and diameter (M2) (nm) of an opening with the maximum extrusion volume of mercury when pressure is decreased from 32,000 PSI to 1 PSI, by the following formula (Z):

$$IB = M2 - M1 \ldots (Z).$$

The measurement based on mercury porosimetry using mercury porosimeter is useful because it is easier than the measurement with an electron microscope which has been often used to evaluate the form of pores and offers excellent quantitative determination.

Particles of silica usually have many recessed pores with an opening on the outer surface. Fig. 1 is a schematic view illustrating the shape of such pores in the radial cross-sectional direction of a particle of silica. Pores recessed in the radial cross-sectional direction of a particle have various shapes, including pore A in which diameter Ma of an opening on the outer surface of a particle is substantially the same as pore dimeter (inner diameter) Ra in the particle, i.e., a pore which is cylindrical in the radial cross-sectional direction of a particle, and pore B in which diameter Mb of an opening on the outer surface of a particle is smaller than pore dimeter (inner diameter) Rb in the particle, i.e., a pore which is ink bottle-shaped in the radial cross-sectional direction of a particle. For pore B, which is ink bottle-shaped in the radial cross-sectional direction of a particle, molecular chains of rubber hardly enter the particle from the outer surface, and thus the molecular chain of rubber fails to adsorb silica sufficiently when silica is compounded into rubber components. Therefore, reducing the number of ink bottle-shaped pores B and increasing the number of pores A which are substantially cylindrical in the radial cross-sectional direction of a particle may facilitate efficient entry of molecular chain of rubber, providing sufficient reinforcing effects and contributing to improvement in steering stability of a tire without increasing tan $\delta$.

Considering the above, the present invention defines the ink bottle-shaped pore index (IB) for silica to be compounded into rubber components so as to reduce the number of pores B which are ink bottle-shaped in the radial cross-sectional direction of a particle. As described above, when pressure is increased in a measurement based on mercury porosimetry using a mercury porosimeter, mercury easily intrudes into the inside of substantially cylindrical pore A because the opening on the outer surface is wide, while mercury is less likely to intrude into the inside of ink bottle-shaped pore B because the opening on the outer surface is narrow. On the other hand, when pressure is deceased, mercury easily extrudes from the inside to the outside of substantially cylindrical pore A, while mercury hardly extrudes from the inside to the outside of ink bottle-shaped pore B for the same reason.

Thus, as shown in Fig. 2, in the measurement based on mercury porosimetry using a mercury porosimeter, hysteresis is generated in mercury intrusion-extrusion curves C - D. More specifically, in a relatively low pressure, mercury gradually intrudes into substantially cylindrical pores A, while at a certain pressure, mercury suddenly intrudes into pores including ink bottle-shaped pores B into which mercury hardly intrudes, in addition to the substantially cylindrical pores, and thus the intrusion volume is sharply increased, forming mercury intrusion curve C with differential mercury intrusion volume (-dV/d(log d)) on the vertical axis and diameter d (nm) of an opening of a pore of silica on the horizontal axis. On the other hand, when the pressure is sufficiently increased and then decreased, mercury still does not easily extrude from pores in a relatively high pressure, while mercury which has intruded into pores suddenly extrudes from pores when a certain pressure is reached, and thus the extrusion volume is sharply increased, forming mercury extrusion curve D

with differential mercury extrusion volume (-dV/d(log d)) on the vertical axis and diameter M (nm) of an opening of a pore of silica on the horizontal axis. Since mercury which has once intruded into pores is less likely to extrude from pores when pressure is decreased, an increase in the extrusion volume is observed when pressure is decreased at a point of diameter (M2) larger than diameter (M1) where the intrusion volume is increased when pressure is increased. The difference in the diameters (M2-M1) corresponds to IB in Fig. 2. The tendency of little extrusion of mercury which has intruded into pores is particularly remarkable in ink bottle-shaped pores B. Although mercury intrudes into pores B in increased pressure, little mercury extrudes from pores B in reduced pressure.

Adopting the above method of measurement and using mercury intrusion/extrusion curves C, D reflecting characteristics of pores, difference IB is determined, by the above formula (Z), between diameter (M1) (nm) of an opening with the maximum intrusion volume of mercury when pressure is increased from 1 PSI to 32,000 PSI and diameter (M2) (nm) of an opening with the maximum extrusion volume of mercury when pressure is decreased from 32,000 PSI to 1 PSI in a measurement based on mercury porosimetry using a mercury porosimeter. Although this value is apparently a difference in those diameters (length: nm), it is substantially a pore index representing the abundance of ink bottle-shaped pores B in silica. More specifically, the lower the abundance of ink bottle-shaped pores B having a sufficiently narrow opening, the closer the mercury intrusion volume and the mercury extrusion volume, the smaller the difference between diameter (M1) of an opening with which the mercury intrusion volume is maximum and diameter (M2) of an opening with which the mercury extrusion volume is the maximum, and the smaller the value of IB. On the other hand, the higher the abundance of ink bottle-shaped pores B, the more the mercury extrusion volume is decreased rather than the mercury intrusion volume, and the larger the difference between diameter (M1) of an opening with which the mercury intrusion volume is maximum and diameter (M2) of an opening with which the mercury extrusion volume is the maximum, and the larger the value of IB.

The above IB may also vary according to the above CTAB value, and the higher CTAB, the lower the IB value. Therefore, silica used in the present invention preferably satisfies the above formula (Y) [$IB \leq -0.36 \times CTAB + 86.8$]. In silica in which IB and CTAB satisfy formula (Y), the number of ink bottle-shaped pores B having a narrow opening is efficiently reduced to increase the abundance of substantially cylindrical pores A, enabling sufficient entry of molecular chain of rubber and adsorption of silica, providing sufficient reinforcing effects and improving steering stability without increasing rolling resistance of a tire.

Silica satisfying formula (Y) has a CTAB specific surface area of preferably 150 $m^2/g$ or more, more preferably from 150 to 300 $m^2/g$, further preferably from 150 to 250 $m^2/g$, and particularly preferably from 150 to 220 $m^2/g$. A CTAB specific surface area of 150 $m^2/g$ or more improves storage modulus of the rubber composition, and further increases steering stability of a tire to which the rubber composition is applied. A CTAB specific surface area of 300 $m^2/g$ or less enables silica to be dispersed well in rubber components, improving processability of the rubber composition.

The rubber composition of the present invention may also contain a silane coupling agent. As such a silane coupling agent, a silane coupling agent usually used in the rubber industry may be used.

When, for example, carbon black is contained as a filler, the ratio of carbon black distributed in an SB phase out of the whole carbon black (hereinafter referred to as "CB distribution ratio") is preferably 90% by mass or more, more preferably 95% by mass or more, and further preferably 96.2% by mass or more.

When, for example, silica is contained as a filler, the ratio of silica distributed in an SB phase out of the whole silica (hereinafter referred to as "Si distribution ratio") is preferably 56% by mass or more, more preferably 57% by mass or more, and further preferably 57.5% by mass or more.

The CB distribution ratio and the Si distribution ratio may be measured by the method described in Examples.

Furthermore, the ratio of mass si of silica to mass cb of carbon black (si/cb) is preferably 0.1 - 1.2.

[Resin]

The rubber composition of the present invention preferably includes a resin.

Including a resin in the rubber composition of the present invention reduces elastic modulus of the resulting vulcanized rubber and tire at low temperature, allowing the tire which is likely to be hard on ice to follow irregularities on the road surface, thus further increasing brake performance on ice.

Examples of resin include C5 resins, C5/C9 resins, C9 resins, phenol resins, terpene resins, terpene-aromatic compound resins, and liquid polyisoprene. These resins may be used alone, or two or more of them may be used in combination.

C5 resins include aliphatic hydrocarbon resins and alicyclic hydrocarbon resins.

Aliphatic hydrocarbon resins include petroleum resins produced by polymerization of C5 petroleum fraction. Examples of petroleum resins produced by using high purity 1,3-pentadiene as a main raw material include ZEON CORPORATION’s trade name "Quintone 100" series (A100, B170, K100, M100, R100, N295, U190, S100, D100, U185, P195N, etc.). Examples of other petroleum resins produced by polymerizing C5 petroleum fraction also include Exxon Mobil Corporation’s trade name "Escorez" series (1102, 1202(U), 1304, 1310, 1315, 1395, etc.) and Mitsui Chemicals’

trade name "Hirez" series (G-100X, -T-100X, -C-110X, -R-100X, etc.).

Examples of alicyclic hydrocarbon resins include cyclopentadiene petroleum resin produced by using cyclopentadiene extracted from C5 fraction as a raw material and dicyclopentadiene petroleum resin produced by using dicyclopentadiene in C5 fraction as a raw material. Examples of cyclopentadiene petroleum resin produced by using high purity cyclopentadiene as a raw material include ZEON CORPORATION's trade name "Quintone 1000" series (1325, 1345, etc.). Furthermore, examples of dicyclopentadiene petroleum resin include Maruzen Petrochemical's trade name "Marukarez" series (M-890A, M-845A, M-990A, etc.).

C5/C9 resins include C5/C9 synthetic petroleum resins, which are, for example, a solid polymer obtained by polymerizing C5-C11 fraction derived from petroleum using Friedel-Crafts catalyst such as $AlCl_3$ and $BF_3$. Specific examples thereof include copolymers containing styrene, vinyl toluene, $\alpha$-methylstyrene, indene, etc. as a main component. C5/C9 resins in which the amount of a component of C9 or more is small are preferred in consideration of the compatibility with diene polymers. In this regard, "the amount of a component of C9 or more is small" means that the amount of a component of C9 or more is less than 50% by mass, more preferably 40% by mass or less based on the total amount of resin. Commercial products may be used as C5/C9 resin, and examples thereof include trade name "Quintone® G100B" (ZEON CORPORATION) and trade name "ECR213" (Exxon Mobil Chemical).

C9 resins include C9 synthetic petroleum resins, which are a solid polymer obtained by polymerizing C9 fraction using Friedel-Crafts catalyst such as $AlCl_3$ and $BF_3$. Examples thereof include copolymers containing indene, methylindene, $\alpha$-methylstyrene, vinyl toluene, etc. as a main component.

Phenols resins such as phenol-formaldehyde resin, resorcin-formaldehyde resin, and cresol-formaldehyde resin are preferred, and phenol-formaldehyde resin is particularly preferred.

Terpene resins refer to resins produced by using naturally derived turpentine oil or orange oil as a main raw material. Examples thereof include Yasuhara Chemical's trade name "YS resin" series (PX-1250, TR-105, etc.), and Hercules' trade name "Piccolyte" series (A115, S115, etc.).

Terpene-aromatic compound resins include, for example, terpene-phenolic resins. Examples thereof include Yasuhara Chemical's trade name "YS POLYSTER" series (U series such as U-130, U-115, and T series such as T-115, T-130, T-145) and Arakawa Chemical Industries' trade name "TAMANOL 901."

Liquid polyisoprene is not particularly limited as long as it has a weight average molecular weight of 50,000 or less. In consideration of affinity to natural rubber, homopolymer of isoprene having an isoprene main skeleton is preferred. Liquid polyisoprene has a weight average molecular weight of preferably from 8,000 to 40,000.

To make the NR phase softer and thus reduce the elastic modulus of a tire at low temperature, the resin is preferably included in the NR phase. Furthermore, for the resin to be easily distributed in the NR phase, a resin having an isoprene main skeleton is preferably used. Specific examples thereof include at least one selected from the group consisting of C5 resins, terpene resins, and liquid polyisoprene which has a weight average molecular weight of 50,000 or less. Of the above resins, C5 resins are preferred.

The content of the resin in the rubber composition, which is not particularly limited, is preferably from 1 to 30 parts by mass, and more preferably from 5 to 25 parts by mass relative to 100 parts by mass of the rubber component.

Furthermore, to achieve both low elastic modulus at low temperature and high hysteresis loss at low temperature, and further improve the performance on ice and wear resistance of a tire when the rubber composition is applied to tread, the ratio of mass rs (parts by mass) of the resin to mass si (parts by mass) of silica (rs/si) is preferably 0.1 - 1.2.

[Foaming agent]

The rubber composition of the present invention preferably includes a foaming agent.

Inclusion of a foaming agent in the rubber composition generates foam in vulcanized rubber in the vulcanization of the rubber composition, and the vulcanized rubber can be formed into foamed rubber. The flexibility of foamed rubber allows the surface of a tire using the vulcanized rubber to be in close contact with the icy road surface. Furthermore, foam creates foam-derived holes (foam pores) on the surface of vulcanized rubber and the surface of a tire, which serve as a water channel for draining water.

Specific examples of foaming agent include azodicarbonamide (ADCA), dinitrosopentamethylenetetramine (DPT), dinitrosopentastyrenetetramine, benzenesulfonylhydrazide derivatives, p,p'-oxybisbenzenesulfonylhydrazide (OBSH), ammonium bicarbonate, sodium bicarbonate and ammonium carbonate which generate carbon dioxide, nitrososulfonylazo compounds which generate nitrogen, N,N'-dimethyl-N,N'-dinitrosophtalamide, toluenesulfonylhydrazide, p-toluenesulfonylsemicarbazide, and p,p'-oxybisbenzenesulfonylsemicarbazide. Of them, azodicarbonamide (ADCA) and dinitrosopentamethylenetetramine (DPT) are preferred in consideration of processability in production. These foaming agents may be used alone, or two or more of them may be used in combination.

The content of the foaming agent in the rubber composition, which is not particularly limited, is preferably from 0.1 to 20 parts by mass, and more preferably from 1 to 10 parts by mass relative to 100 parts by mass of the rubber component.

In the rubber composition, urea, zinc stearate, zinc benzenesulfinate, zinc oxide, etc., may also be used as foaming auxiliary. These may be used alone, or two or more of them may be used in combination. Using foaming auxiliary in combination facilitates foaming reaction to increase the degree of completion of the reaction, suppressing unnecessary degradation over time.

Vulcanized rubber obtained by vulcanizing the rubber composition containing a foaming agent has a foaming ratio of usually from 1 to 50%, and preferably from 5 to 40%. When a foaming agent is compounded and the foaming ratio is 50% or less, voids on the surface of rubber are not excessively enlarged to provide a sufficient ground contact area; and since the amount of foam is properly maintained while ensuring the generation of foam which effectively serve as a drain, durability is less likely to be lost. In this regard, the foaming ratio of vulcanized rubber means average foaming ratio Vs, which is specifically calculated by the following formula (1).

$$Vs = (\rho_0/\rho_1 - 1) \times 100\ (\%) \qquad (1)$$

In formula (1), $\rho_1$ represents the density (g/cm$^3$) of vulcanized rubber (foamed rubber) and $\rho_0$ represents the density (g/cm$^3$) of the solid phase of the vulcanized rubber (foamed rubber). The mass of vulcanized rubber in ethanol and the mass of the vulcanized rubber in air are measured to calculate the density of vulcanized rubber and the density of the solid phase of the vulcanized rubber. The foaming ratio may be appropriately changed according to the type, amount, etc. of foaming agent and foaming auxiliary.

[Hydrophilic short fiber]

The rubber composition of the present invention preferably includes hydrophilic short fiber.

When the rubber composition includes hydrophilic short fiber, long foam appears in a tire (more specifically, tread) after vulcanizing the rubber composition; and as the tire wears, the long foam is exposed to the surface of the tire to form a void, playing a role of a drain which effectively drains water. The void may be in the form of a hole, a dent or a groove.

Furthermore, the hydrophilicity of the short fiber allows water to be easily absorbed in the void on the surface of a tire resulting from the short fiber.

As used herein, the hydrophilic short fiber refers to short fiber which has a contact angle with water of 5 - 80 degrees.

The contact angle of the hydrophilic short fiber with water may be determined by measuring the angle that a line formed by the surface of a specimen makes with a tangent to the surface of a water droplet, when the specimen is prepared by forming hydrophilic short fiber into a smooth plate, and water is dropped on the surface of the specimen using an automatic contact angle meter, DM-301 made by Kyowa Interface Science, in the condition of 25°C and a relative humidity of 55%, and immediately after that the specimen is observed from the side.

A resin having a hydrophilic group in a molecule (sometimes referred to as hydrophilic resin) may be used as the hydrophilic short fiber. More specifically, a resin having at least one selected from an oxygen atom, a nitrogen atom and a sulfur atom is preferred. Examples thereof include a resin having at least one substituent selected from the group consisting of -OH, -COOH, -OCOR (R is alkyl group), $-NH_2$, -NCO and -SH. Of these substituents, -OH, -COOH, -OCOR, $-NH_2$ and -NCO are preferred.

Preferably, the hydrophilic resin has a small contact angle with water and has affinity to water, while the resin is insoluble in water.

The insolubility of the hydrophilic resin in water prevents the hydrophilic resin from being dissolved in water when water is attached to the surface of vulcanized rubber and the surface of a tire, allowing the water absorbing power of voids resulting from the short fiber to be maintained.

Examples of such hydrophilic resin having a small contact angle with water and insoluble in water include ethylene-vinyl alcohol copolymer, vinyl alcohol homopolymer, poly(meth)acrylic acid resin, or resin made of an ester thereof, polyamide resin, polyethylene glycol resin, carboxyvinyl copolymer, styrene-maleic acid copolymer, polyvinylpyrrolidone resin, vinyl pyrrolidone-vinyl acetate copolymer, and mercaptoethanol.

Of them, at least one resin selected from the group consisting of ethylene-vinyl alcohol copolymer, vinyl alcohol homopolymer, poly(meth)acrylic acid resin, polyamide resin, aliphatic polyamide resin, aromatic polyamide resin, polyester resin, polyolefin resin, polyvinyl alcohol resin and acrylic resin is preferred, and ethylene-vinyl alcohol copolymer is more preferred.

The shape of the short fiber is not particularly limited and may be appropriately selected according to the purpose. To efficiently form long foam which can serve as a micro-drain in vulcanized rubber prepared by vulcanizing the rubber composition including the short fiber, the short fiber has a length of preferably from 0.1 to 10 mm, more

preferably from 0.5 to 5 mm in the longitudinal direction in average of 100 pieces of the short fiber. Likewise, to do so, the short fiber has a mean diameter (D) of preferably 10 - 200 μm, more preferably 20 - 100 μm in average of 100 pieces of the short fiber.

The content of the short fiber in the rubber composition is preferably from 0.2 to 20 parts by mass, and more preferably from 1 to 10 parts by mass relative to 100 parts by mass of the rubber component.

[Vulcanizing agent]

The rubber composition of the present invention preferably includes a vulcanizing agent.

The vulcanizing agent is not particularly limited, and sulfur is usually used. Examples thereof include powdered sulfur, precipitated sulfur, colloidal sulfur, surface treated sulfur, and insoluble sulfur.

The content of the vulcanizing agent in the rubber composition of the present invention is preferably from 0.1 to 10 parts by mass relative to 100 parts by mass of the rubber component. A content of vulcanizing agent of 0.1 part by mass or more allows vulcanization to proceed thoroughly, and a content of 10 parts by mass or less suppresses aging of vulcanized rubber.

The content of the vulcanizing agent in the rubber composition is more preferably 0.5 - 8 parts by mass, and further preferably 1 - 6 parts by mass relative to 100 parts by mass of the rubber component.

[Other components]

The rubber composition of the present invention may include other components in addition to the rubber component, filler, silane coupling agent, resin, foaming agent, hydrophilic short fiber, and vulcanizing agent described above.

These other components are not particularly limited, and compounding agents usually used in the rubber industry, such as softening agent, stearic acid, antioxidant, zinc oxide, foaming auxiliary, and vulcanization accelerator may be appropriately selected and included in an amount that does not impair the object of the present invention.

[Preparation of rubber composition]

The rubber composition of the present invention may be prepared by compounding and kneading the above components using a kneader such as a Banbury mixer, a roll, or an internal mixer.

At that stage, the compounding amount of the rubber component, filler, and others is the same as the content in the rubber component described above.

The respective components may be kneaded in a step, or two or more divided steps. Examples of methods of kneading components in two steps include a method in which a rubber component, filler, resin, silane coupling agent, hydrophilic short fiber, and other components to be compounded except for a vulcanizing agent and a foaming agent are kneaded in the first step, and the vulcanizing agent and the foaming agent are kneaded in the second step.

The maximum temperature of the first step of kneading is preferably from 130 to 170°C and the maximum temperature of the second step is preferably from 90 to 120°C.

<Vulcanized rubber, tire>

The vulcanized rubber and the tire of the present invention are prepared using the rubber composition of the present invention.

The tire may be prepared by molding the rubber composition of the present invention and then vulcanizing, or by, for example, the step of preliminary vulcanization to obtain a semi-vulcanized rubber from the rubber composition, and molding the same and then subjecting it to main vulcanization, according to the type and members of the tire to which the rubber composition is applied.

Having both low elastic modulus at low temperature and high hysteresis loss at low temperature and having excellent brake performance on ice, the rubber composition is preferably applied to a tread member, in particular, a tread member of a studless tire, of various members of a tire. Furthermore, the tire may be charged with usual air or air with controlled oxygen partial pressure, or inert gas such as nitrogen, argon and helium.

The vulcanized rubber and the tire of the present invention preferably have foam pores.

The vulcanized rubber and the tire have a foaming ratio of usually from 1 to 50%, and preferably from 5 to 40%. When the foaming ratio is in the above range, foam pores on the surface of the tire are not excessively enlarged to provide a sufficient ground contact area; and since the amount of foam is properly maintained while ensuring the generation of foam pores which effectively serve as a drain, durability is less likely to be lost. In this regard, the foaming ratio of the tire is calculated by the formula (1) described above.

## Examples

Hereinafter the present invention will be described in more detail with reference to Examples, but these Examples are for the purpose of illustration of the present invention and do not limit the present invention.

[Preparation of rubber composition]

The components to be compounded in the rubber composition were kneaded according to the compounding formulation shown in Tables 1 and 2 by using a Banbury mixer to prepare a sample rubber composition. Sulfur, which is a vulcanizing agent, and a vulcanization accelerator were compounded at the final stage of kneading.

Table 1

| | |
|---|---|
| Rubber components (Rubber components 1-3 described in Table 2) | Amount shown in Table 2 |
| Filler (carbon black) | Amount shown in Table 2 |
| Filler (silica) | Amount shown in Table 2 |
| Silane coupling agent | 3 |
| Resin | 20 |
| Stearic acid | 2 |
| Zinc oxide | 2 |
| Vulcanization accelerator | 1 |
| Vulcanizing agent | 2 |
| Antioxidant | 2 |
| Foaming agent | 5 |
| Hydrophilic short fiber | 2 |
| (Parts by mass) | |

Details of the components described in Table 1 are as follows.
Carbon black: Asahi Carbon's trade name "Carbon N220"
Silica: Tosoh Silica's trade name "NIPSIL AQ"
Silane coupling agent: Evonik's trade name "Si69"
Resin: Mitsui Chemicals' C5 resin, trade name "HI-REZ G-100X"
Stearic acid: New Japan Chemical's trade name "Stearic acid 50S"
Zinc oxide: Hakusui Tech's trade name "No. 3 zinc oxide"
Vulcanization accelerator: Ouchi Shinko Chemical Industry's trade name "Nocceler DM," di-2-benzothiazolyl disulfide
Vulcanizing agent: Tsurumi Chemical Industry's trade name "Powder Sulfur"
Antioxidant: N-isopropyl-N'-phenyl-p-phenylenediamine
Foaming agent: dinitrosopentamethylenetetramine (DPT)
Hydrophilic short fiber: resin having a diameter of 32 μm prepared by kneading polyethylene [Japan Polyethylene's trade name "Novatec HJ360" (MFR 5.5, melting point 132°C)] by a kneader, extruding the resin through a die, and cutting in a length of 3 mm.
Furthermore, details of the components listed in the rows of from "Rubber component 1" to "Rubber component 3" in Table 2 are as follows.

(1) Rubber component 1 (Natural rubber)
NR: TSR20
(2) Rubber component 2 (Non-modified BR, Modified BR)
Non-modified BR: Ube Industries' trade name "UBEPOL BR150L"
Modified BR1: modified polybutadiene rubber produced by the following method Modified BR2: modified polybutadiene rubber produced by the following method

[Method of producing modified BR1]

(1) Preparation of catalyst

7.11 g of a cyclohexane solution of butadiene (15.2% by mass), 0.59 mL of a cyclohexane solution of neodymium neodecanoate (0.56 mol/L), 10.32 mL of a toluene solution of methylaluminoxane MAO (Tosoh Akzo's trade name "PMAO") (3.23 mol/L as aluminium concentration), and 7.77 mL of a hexane solution of diisobutylaluminium hydride (by Kanto Chemical) (0.90 mol/L) were, in that order, put into a dried, nitrogen-purged, 100-mL glass bottle with a rubber stopper, and ripened at room temperature for 2 minutes, and then 1.45 mL of a hexane solution of diethylaluminium chloride (by Kanto Chemical) (0.95 mol/L) was added thereto and ripened for 15 minutes at room temperature with intermittently stirring. The neodymium concentration in the thus-obtained catalyst solution was 0.011 mol/L.

(2) Preparation of intermediate polymer

A glass bottle with a rubber stopper, having a volume of about 900 mL, was dried and purged with nitrogen, and a cyclohexane solution of dried and purified butadiene and dry cyclohexane were put thereinto to provide a condition where 400 g of a cyclohexane solution of 12.5% by mass butadiene was kept in the bottle. Next, 2.28 ml (0.025 mmol as neodymium) of the solution of catalyst prepared in (1) above was put into the bottle, and polymerization was carried out in a warm water bath at 50°C for 1.0 hour to give an intermediate polymer. The resulting polymer had a microstructure with a cis-1,4-bond content of 95.5%, a trans-1,4-bond content of 3.9%, and a vinyl bond content of 0.6%.

(3) Modification

A hexane solution of 3-glycidoxypropyltrimethoxysilane at a concentration of 1.0 mol/L was added to the polymer solution prepared in above (2) so that the amount of 3-glycidoxypropyltrimethoxysilane was 23.5 molar equivalents relative to neodymium to perform modification at 50°C for 60 minutes.

Subsequently, 1.2 mL of sorbitan trioleate (available from Kanto Kagaku) was added thereto to perform the reaction of modification for another 1 hour at 60°C. Then 2 mL of an isopropanol 5% by mass solution of an antioxidant 2,2'-methylene-bis(4-ethyl-6-t-butyl phenol) (NS-5) was added to the polymerization system to stop the reaction, and the reaction mixture was reprecipitated in isopropanol containing a small amount of NS-5, and then dried in a drum drier to give modified polybutadiene (modified BR1). The modified BR1 did not contain macrogel and had a Mooney viscosity at 100°C ($ML_{1+4}$, 100°C) of 59. The microstructure after the modification was the same as that of the above intermediate polymer.

[Method of producing modified BR2]

(1) Production of non-modified polybutadiene

1.4 kg of cyclohexane, 250 g of 1,3-butadiene, and 2,2-ditetrahydrofurylpropane (0.285 mmol) was put into a 5 L, nitrogen-purged autoclave in the form of a cyclohexane solution in a nitrogen atmosphere. 2.85 mmol of n-butyl lithium (BuLi) was added thereto, and then polymerization was performed in a hot water bath at 50°C equipped with a stirrer for 4.5 hours. The reaction conversion ratio of 1,3-butadiene was almost 100%. Some of the polymer solution was drawn into a methanol solution containing 1.3 g of 2,6-di-tert-butyl-p-cresol to stop the polymerization, and then the solvent was removed by steam stripping, and the resultant was dried using a roll at 110°C to give polybutadiene before modification. The resulting polybutadiene before modification was measured for the microstructure (vinyl bond content), and as a result, the vinyl bond content was 30% by mass.

(2) Production of primary amine modified polybutadiene (modified BR2)

The polymer solution obtained in (1) was kept at a temperature of 50°C without deactivation of the polymerization catalyst, and 1,129 mg (3.364 mmol) of N,N-bis(trimethylsilyl) aminopropylmethyldiethoxysilane having a protected primary amino group was added thereto to perform the reaction of modification for 15 minutes.

Subsequently, 8.11 g of tetrakis(2-ethyl-1,3-hexanediolato) titanium, a condensation accelerator, was added thereto and the mixture was further stirred for 15 minutes.

Finally, 242 mg of silicon tetrachloride which is a metal halogen compound was added to the polymer solution after the reaction, and 2,6-di-tert-butyl-p-cresol was added thereto. The mixture was then subjected to steam stripping to remove the solvent and deprotect the protected primary amino group. The rubber was dried with a hot roll adjusted at 110°C to give primary amine modified polybutadiene (Modified BR2). The resulting modified polybutadiene was

measured for the microstructure (vinyl bond content), and as a result, the vinyl bond content was 30% by mass.

The microstructure (vinyl bond content) of the intermediate polymer, the non-modified polybutadiene and the modified polybutadiene was measured by an infrared method (the Morello method).

(3) Rubber component 3 (Non-modified SBR, modified SBR)

Non-modified SBR: JSR's trade name "SBR #1500"
Modified SBR: modified styrene-butadiene copolymer rubber produced by the following method

[Method of producing modified SBR]

A cyclohexane solution of 1,3-butadiene and a cyclohexane solution of styrene were put into a dried, nitrogen-purged, pressure-tight glass container having a volume of 800 mL, in such a manner that the amount of 1,3-butadiene therein could be 67.5 g and that of styrene could be 7.5 g. 0.6 mmol of 2,2-ditetrahydrofurylpropane and 0.8 mmol of n-butyllithium were added thereto, and then polymerization was performed at 50°C for 1.5 hours. 0.72 mmol of N,N-bis(trimethylsilyl) aminopropylmethyldiethoxysilane, which is a modifier, was added to the polymerization system in which the polymerization conversion ratio reached almost 100% to perform the reaction of modification at 50°C for 30 minutes. Subsequently, 2 mL of an isopropanol 5% by mass solution of an antioxidant 2,6-di-t-butyl-4-cresol (BHT) was added thereto to stop the polymerization, and the resultant was dried by a usual method to give modified SBR. The resulting modified SBR was measured for the microstructure (vinyl bond content) by the Morello method, and as a result, the bound styrene content was 10% by mass and the vinyl bond content in butadiene was 40% by mass.

The bound styrene content of the polymer was determined from the integral ratio in the $^1$H-NMR spectrum.

The ratio of vinyl bond content vi (%) in the rubber component to content a (parts by mass) of the rubber component (vi/a) was calculated by the formula described above: $[(a_b \times vi_b) + (a_{sb} \times vi_{sb})]/a$. The ratio is shown in the row of "vi/a" in Table 2.

<Measurement of distribution ratio of filler in SB phase>

The ratio of the filler distributed in a phase containing polybutadiene rubber and styrene-butadiene copolymer rubber (SB phase), or a phase containing polybutadiene rubber (BR phase) in Comparative Examples 1 to 3, to the whole filler, was measured as follows. The results are shown in the row of "distribution ratio of filler" in Table 2.

Likewise, the ratio of carbon black distributed in the SB phase or the BR phase to the whole carbon black, and the ratio of silica distributed in the SB phase or the BR phase to the whole silica are each shown in the row of "CB distribution ratio" and "Si distribution ratio" in Table 2.

The distribution ratio of the filler in the SB phase (SB phase or BR phase) was measured by using a sample prepared by cutting the vulcanized rubber sample of Examples and Comparative Examples into a small piece with a razor. After cutting the sample in the direction at a 38° angle to the top surface of the sample, the smooth surface of the sample formed by cutting is photographed in the direction perpendicular to the smooth surface with a scanning electron microscope (SEM), trade name "Ultra 55" made by Carl Zeiss using focused ion beam at an accelerating voltage of 1.8 - 2.2 V to measure the distribution ratio. The SEM image obtained was subjected to image processing and analysis to determine the distribution ratio of the filler.

<Vulcanization of rubber composition and evaluation of vulcanized rubber>

1. Measurement of storage modulus E' at -20°C and loss tangent δ at -20°C

The storage modulus (E') and the loss tangent (tan δ) of vulcanized rubber prepared by vulcanizing the rubber composition at 145°C for 33 minutes were measured using a spectrometer made by Ueshima Seisakusho in the condition of a temperature of -20°C, an initial strain of 2%, a dynamic strain of 1% and a frequency of 52 Hz.

Using the result of measurement of the vulcanized rubber of Comparative Example 1 as a control, the storage modulus index at -20°C (-20°C E' index) and the loss tangent index at -20°C (-20°C tanδ index) were calculated by the following formula. The indices are shown in Table 2.

$$\text{-20°C E' index} = (\text{E' of Example or Comparative Example other than Comparative Example 1} / \text{E' of Comparative Example 1}) \times 100$$

$$-20°C\ \tan\delta\ \text{index} = (\tan\delta\ \text{of Example or Comparative Example other than Comparative Example 1}/\ \tan\delta\ \text{of Comparative Example 1}) \times 100$$

If the -20°C E' index value is smaller than 100, the rubber has lower elastic modulus at low temperature and exhibits a better performance. It can be deemed that if the -20°C tanδ index value is larger than 100, the rubber has high hysteresis loss at low temperature and has a better performance.

2. Evaluation of properties on ice

The rubber composition prepared as described above was used for tread to produce a test tire (tire size 195/65R15) by a usual method.

Four each of the test tires of Examples and Comparative Examples were mounted on a Japanese car of 1,600 cc displacement, and braking performance on ice at a freezing temperature of -1°C was observed. Using the test tire of Comparative Example 1 as a control, the performance on ice was expressed as an index: index of performance on ice = (braking distance of test tire of Comparative Example 1 / braking distance of test tire of Example or Comparative Example other than Comparative Example 1) × 100

This shows that the larger the index value, the better the performance on ice.

Table 2

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| Rubber component 1 | Type | NR | NR | NR | NR | NR | NR | NR | NR | NR |
| | Parts | 60 | 60 | 60 | 60 | 60 | 50 | 40 | 60 | 40 |
| Rubber component 2 | Type | Non-modified BR | Modified BR1 | Modified BR2 | Modified BR2 | Modified BR2 | Modified BR2 | Modified BR2 | Modified BR1 | Modified BR1 |
| | Parts | 40 | 40 | 40 | 20 | 20 | 30 | 40 | 20 | 40 |
| | Amount of styrene | 0 | 0 | 0 | 0 | 0 | 0 | 0 | 0 | 0 |
| | Amount of vinyl | 0 | 0 | 30 | 30 | 30 | 30 | 30 | 0 | 0 |
| Rubber component 3 | Type | - | - | - | Non-modified SBR | Modified SBR | Modified SBR | Modified SBR | Modified SBR | Modified SBR |
| | Parts | - | - | - | 20 | 20 | 20 | 20 | 20 | 20 |
| | Amount of styrene | - | - | - | 24 | 10 | 10 | 10 | 10 | 10 |
| | Amount of vinyl | - | - | - | 19 | 40 | 40 | 40 | 40 | 40 |
| Carbon black (CB) | Parts | 35 | 35 | 35 | 35 | 35 | 35 | 35 | 35 | 35 |
| Silica (Si) | Parts | 35 | 35 | 35 | 35 | 35 | 35 | 35 | 35 | 35 |
| Distribution ratio of filler | % | 67.3 | 74.6 | 75.6 | 64.2 | 78.6 | 82.3 | 86.8 | 76.9 | 81.5 |
| CB distribution ratio | % | 96.1 | 96.1 | 95.4 | 94.5 | 96.2 | 97.5 | 98.5 | 96.3 | 97.7 |
| Si distribution ratio | % | 38.5 | 53 | 55.7 | 33.8 | 60.9 | 67.0 | 75.0 | 57.5 | 65.2 |
| [vi/a] | - | 0 | 0 | 12 | 9.8 | 14 | 17 | 20 | 8 | 8 |
| -20°C E' index | - | 100 | 93 | 91 | 105 | 95 | 92 | 89 | 92 | 86 |

(continued)

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| -20°C tanδ index | - | 100 | 98 | 100 | 118 | 118 | 114 | 110 | 114 | 108 |
| Index of performance on ice | - | 100 | 104 | 103 | 103 | 110 | 112 | 114 | 112 | 116 |

As is evident from Table 2, the vulcanized rubbers obtained by using the rubber composition of Comparative Examples 1 - 3 which does not contain styrene-butadiene copolymer rubber as the rubber component or the rubber composition of Comparative Example 4 which does not contain 50% by mass or more of silica in the SB phase have a -20°C E' index value of 100 or more, or even if it is less than 100, the -20°C tanδ index value is less than 100, suggesting that low elastic modulus at low temperature and high hysteresis loss at low temperature cannot be simultaneously satisfied.

On the other hand, it is found that the vulcanized rubbers prepared by using the rubber composition of Examples 1 - 3 have a -20°C E' index value of less than 100 and a -20°C tanδ index value of much more than 100, satisfying both low elastic modulus at low temperature and high hysteresis loss at low temperature.

Furthermore, the index of performance on ice of the tire obtained by using the rubber composition of Examples 1 - 3 is much higher than the index of performance on ice of the tire obtained by using the rubber composition of Comparative Examples 1 to 4, showing that the tires of Examples 1 - 3 have better performance on ice than the tire of Comparative Examples 1 - 4.

Industrial Applicability

The present invention can provide a tire that combines a low elastic modulus at low temperatures with a high hysteresis loss at low temperatures and has excellent on-ice brake performance. This tire has effective grip force even when traveling on an ice and snow road, allowing a vehicle to have excellent braking performance, and therefore is suitable as a studless tire.

## Claims

1. A rubber composition comprising
a rubber component comprising a natural rubber, a polybutadiene rubber, and a styrene-butadiene copolymer rubber, and
50 to 90 parts by mass of a filler comprising silica relative to 100 parts by mass of the rubber component, wherein the natural rubber is present in a mass n, the polybutadiene rubber is present in a mass b, and the styrene-butadiene copolymer rubber is present in a mass s,
the mass n of the natural rubber in the rubber component is 40% by mass or more,
the mass n, the mass b of the polybutadiene rubber, and the mass s of the styrene-butadiene copolymer rubber satisfy the relation $s \leq b \leq n$, provided that when $n = b$, $s < b$, and
50% by mass or more of the silica is comprised in a phase comprising the polybutadiene rubber and the styrene-butadiene copolymer rubber.

2. The rubber composition according to claim 1, wherein the ratio of the mass b to the mass s (b/s) is from 1.0 to 2.0, and the ratio of the vinyl bond content vi of the rubber component to the content a of the rubber component [vi/a] is 8 or more.

3. The rubber composition according to claim 1 or 2, wherein the ratio of the bound styrene content st (%) of the rubber component to the mass s (st/s) is 1.0 or less.

4. The rubber composition according to any one of claims 1 to 3, wherein the polybutadiene rubber and the styrene-butadiene copolymer rubber are each silane-modified.

5. The rubber composition according to any one of claims 1 to 4, wherein the composition further comprises a resin, and the ratio of the mass rs of the resin to the mass si of the silica (rs/si) is from 0.1 to 1.2.

6. The rubber composition according to any one of claims 1 to 5, wherein the filler further comprises carbon black, and the ratio of the mass si of the silica to the mass cb of the carbon black (si/cb) is from 0.1 to 1.2.

7. The rubber composition according to any one of claims 1 to 6, further comprising a foaming agent.

8. The rubber composition according to any one of claims 1 to 7, further comprising a hydrophilic short fiber.

9. The rubber composition according to any one of claims 1 to 8, the mass n of the natural rubber is 40 to 80% by mass, the mass b of the polybutadiene rubber is 5 to 40% by mass, and the mass s of the styrene-butadiene copolymer rubber is 3 to 30% by mass in the rubber component.

**10.** A vulcanized rubber obtained by vulcanizing the rubber composition according to any one of claims 1 to 9.

**11.** The vulcanized rubber according to claim 10 having foam pores.

**12.** A tire comprising the vulcanized rubber according to claim 10.

**13.** The tire according to claim 12 having foam pores.

[Fig. 1]

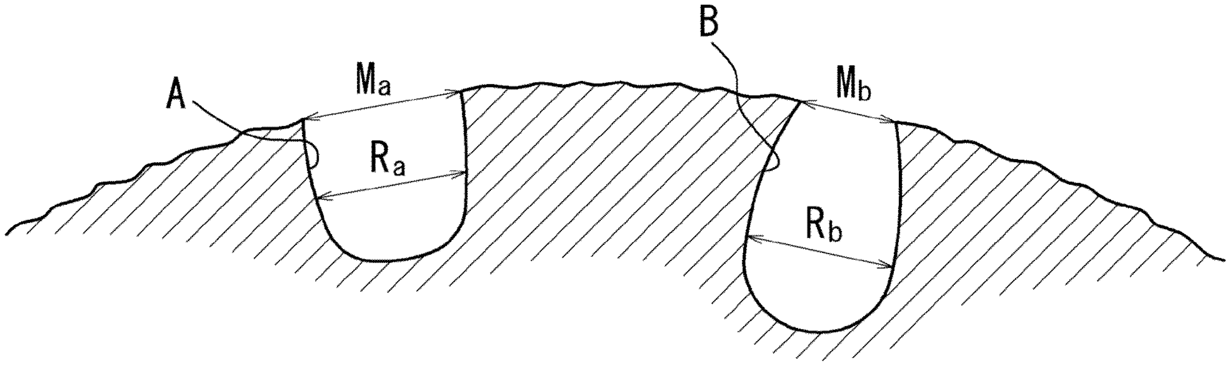
A
Ma
Ra
B
Mb
Rb

[Fig. 2]

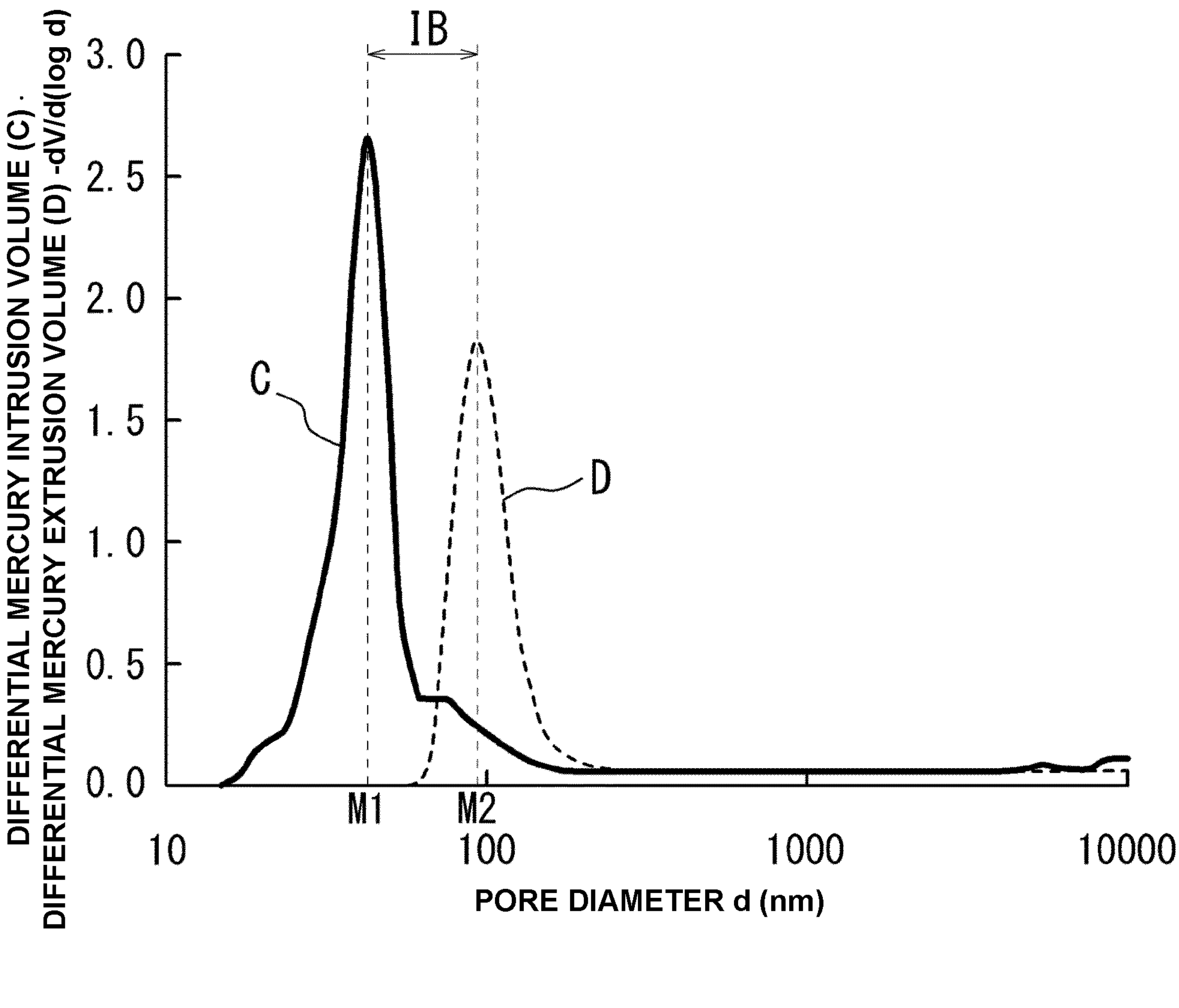
DIFFERENTIAL MERCURY INTRUSION VOLUME (C) ·
DIFFERENTIAL MERCURY EXTRUSION VOLUME (D) -dV/d(log d)
IB
C
D
3. 0
2. 5
2. 0
1. 5
1. 0
0. 5
0. 0
M1
M2
10
100
1000
10000
PORE DIAMETER d (nm)

## INTERNATIONAL SEARCH REPORT

International application No.
PCT/JP2018/037822

A. CLASSIFICATION OF SUBJECT MATTER
Int.Cl. C08L7/00(2006.01)i, B60C1/00(2006.01)i, C08J9/06(2006.01)i, C08K3/04(2006.01)i, C08K3/36(2006.01)i, C08K7/02(2006.01)i, C08L9/00(2006.01)i, C08L9/06(2006.01)i
According to International Patent Classification (IPC) or to both national classification and IPC

B. FIELDS SEARCHED
Minimum documentation searched (classification system followed by classification symbols)
Int.Cl. C08L1/00-101/14, C08K3/00-13/08, C08J9/00-9/42, B60C1/00-19/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2016-125017 A (SUMITOMO RUBBER INDUSTRIES, LTD.) 11 July 2016, claims 1-2, paragraphs [0009], [0029], [0030], [0035], [0064], [0101]-[0103], [0107], [0112], table 1, example 2 & US 2017/0225512 A1, claims 1-2, paragraphs [0008], [0031], [0032], [0037], [0058], [0922], [0923], [0927], [0929], [1107], table 10, example 59 & WO 2016/072499 A1 & EP 3196233 A1 & CN 107108908 A | 1-4, 9-10, 12<br>5-9, 11, 13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07.01.2019 | 15.01.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/037822

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-099250 A (ASAHI KASEI KOGYO CO., LTD.) 30 April 1988, entire text (Family: none) | 1-13 |
| A | JP 2010-111753 A (SUMITOMO RUBBER INDUSTRIES, LTD.) 20 May 2010, entire text & US 2010/0108213 A1, entire text & EP 2184317 A1 & CN 101735498 A | 1-13 |
| A | WO 2017/126629 A1 (BRIDGESTONE CORPORATION) 27 July 2017, entire text & CN 108473723 A | 1-13 |
| A | JP 2016-108379 A (YOKOHAMA RUBBER CO., LTD.) 20 June 2016, entire text (Family: none) | 1-13 |
| A | JP 2015-157879 A (SUMITOMO RUBBER INDUSTRIES, LTD.) 03 September 2015, entire text (Family: none) | 1-13 |
| A | JP 2016-094561 A (SUMITOMO RUBBER INDUSTRIES, LTD.) 26 May 2016, entire text (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015229701 T
- JP 2002127714 T
- JP 2002069239 T
- WO 2017126629 A